# FASCICULE DE BREVET EUROPEEN

(11) **EP 4 187 038 B1**
(45) Date de publication et mention de la délivrance du brevet: **17.07.2024**
(21) Numéro de dépôt: 22020545.4
(22) Date de dépôt: 10.11.2022
(51) Int. Cl.: E04D 15/00, F16M 13/04, A47L 11/38, B08B 1/00, B08B 3/02, B08B 1/12, A47L 11/40

(54) **DISPOSITIF PORTABLE POUR L'UTILISATION À DISTANCE D'APPAREILS**
TRAGBARE VORRICHTUNG ZUR FERNVERWENDUNG VON GERÄTEN
PORTABLE DEVICE FOR REMOTE USE OF APPLIANCES

(30) Priorité: 29.11.2021 FR 2112676
(43) Date de publication de la demande: 31.05.2023
(73) Titulaire: Delevingne, Ludovic, 60330 Lagny-le-Sec (FR)
(72) Inventeur: Delevingne, Ludovic, 60330 Lagny-le-Sec (FR)

(56) Documents cités:
- WO-A1-01/75353
- CN-A- 103 196 014
- US-B1- 6 478 427

## Description

La présente invention concerne un dispositif portable réalisant des tâches à distance, à l'aide d'appareils 2 fixés à l'extrémité avant d'une potence 1. Un opérateur 16 porte et manoeuvre la potence 1 à l'opposé de l'appareil 2, grâce à un équipement de manutention 15 fixé sur la partie inférieure de la potence 1. La distance qui sépare l'opérateur 16 de l'appareil 2, est comprise généralement entre 2 mètres et 25 mètres.

Les tâches réalisées par la présente invention sont de tous ordres, à condition de pouvoir être réalisées à distance, et à condition que le poids de l'appareil 2 ne dépasse pas de préférence 1 kg. L'appareil 2 détermine les tâches réalisées à distance par la présente invention, en fonction du but pour lequel l'appareil 2 a été conçu. Ces tâches peuvent être de nature très différente, et suivant des variantes préférées mais non limitatives pouvant être cumulatives ou alternatives, de type travaux à distance de nettoyage, traitement, imperméabilisation de toitures, façades, vitres, panneaux solaires, ou utilisation à distance d'appareils photographiques dans des lieux inaccessibles, ou utilisation à distance d'instruments de mesure et de contrôle au-dessus de l'ouverture de réservoirs de produit dangereux par exemple.

Les solutions proposées à ce jour pour l'utilisation à distance d'un appareil sont de deux ordres :
- La première solution consiste à l'utilisation d'une perche rectiligne, équipée à son extrémité de l'appareil devant réaliser les opérations pour lesquelles il a été conçu.

Mais la hauteur de travail est limitée, et la maniabilité de la perche est réduite.

Par exemple le document WO01/75353 A1 divulgue un dispositif portable pour utiliser à distance une caméra.
- La seconde solution consiste à l'utilisation d'un appareil volant de type drone, équipé à son bord de l'appareil devant réaliser les opérations en question. Mais cette solution est coûteuse, et nécessite une formation spécifique de l'opérateur.

Il existe donc un besoin de proposer une solution qui allie sécurité, ergonomie, efficacité, et économie.

A cet effet, la présente invention propose un dispositif portable selon la revendication 1, et entre autres concerne l'utilisation d'une potence 1 portable permettant l'utilisation d'un appareil 2 sur des distances et des hauteurs importantes. Typiquement la présente invention permet de réaliser des travaux de nettoyage, de traitement et d'imperméabilisation, sur des parties de bâtiment comme les toitures, façades ou panneaux solaires jusqu'à une hauteur de 15 mètres depuis le sol. Le coude formé par le mât 5 et la traverse 3 de la potence 1, permet d'atteindre des hauteurs plus importantes qu'une perche rectiligne. La potence 1 selon l'invention est aussi plus ergonomique qu'une perche. D'une part l'équipement de manutention 15 fixé sur la potence 1 facilite la manutention et manoeuvrabilité à distance de l'appareil 2. D'autre part le poids de la potence 1 et de ses accessoires étant réparti à la fois à l'avant et à l'arrière de l'opérateur 16, la potence 1 est plus ergonomique qu'une perche, pour des travaux à distance et hauteur équivalentes.

La présente invention se rapporte plus spécifiquement à un dispositif portable selon la revendication 1 et à son utilisation. Ce dispositif portable comprend une potence 1 portable, dont les principales parties constitutives sont : un mât 5 équipé d'un équipement de manutention 15 à destination de l'opérateur 16, une traverse 3 équipée d'un appareil 2 à son extrémité avant, ainsi qu'un système de fixation 4 qui réalise la liaison encastrement entre le mât 5 et la traverse 3, et plusieurs liens obliques 12 de consolidation. Suivant des variantes préférées mais non limitatives pouvant être cumulatives ou alternatives, la potence 1 selon l'invention, peut aussi être équipée, d'un système vidéo 6 à destination de l'opérateur 16, et d'une ou plusieurs protections 52 de la partie avant de la traverse 3. Etant donné la grande variété d'applications de la présente invention, l'appareil 2 peut tout aussi bien être un outil, une machine, un instrument ou un dispositif réalisant à distance les tâches pour lesquelles ils ont été conçus. L'appareil 2 est généralement équipé d'un manche, qui se fixe à l'extrémité avant de la traverse 3 à l'aide d'un système de serrage identique à celui des tubes constituant le mât 5 ou la traverse 3. L'appareil 2 peut être autonome, ou relié à un dispositif d'alimentation 8 posé au sol, afin d'être alimenté en énergie, liquide, gaz, ou pour échanger des données informatiques.

La présente invention est maintenant décrite à l'aide d'exemples uniquement illustratifs et nullement limitatifs de la portée de l'invention, et à partir des illustrations ci-jointes, dans lesquelles :

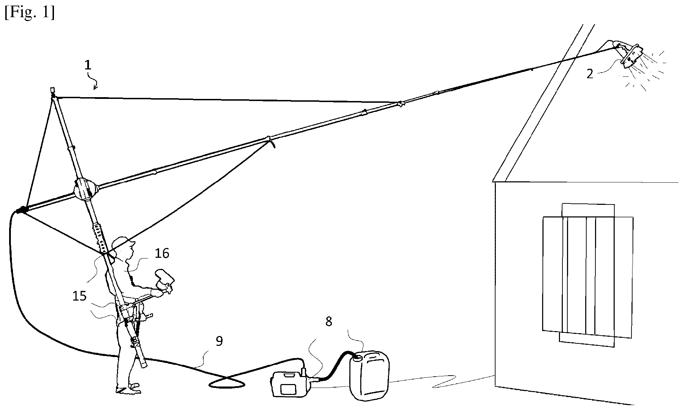

La [Fig.1] présente la présente invention dans un exemple de situation de travail.
La [Fig.2] présente la présente invention avec chacun de ses composants et un exemple d'appareil 2 : la rampe de pulvérisation 45 pour le traitement des toitures.
La [Fig.3] présente des exemples d'appareils 2 destinés au traitement, et au nettoyage de toitures, façades, vitres et panneaux solaires.
La [Fig.4] présente la présente invention sans l'opérateur 16 pour une meilleure visibilité de l'équipement de manutention 15.

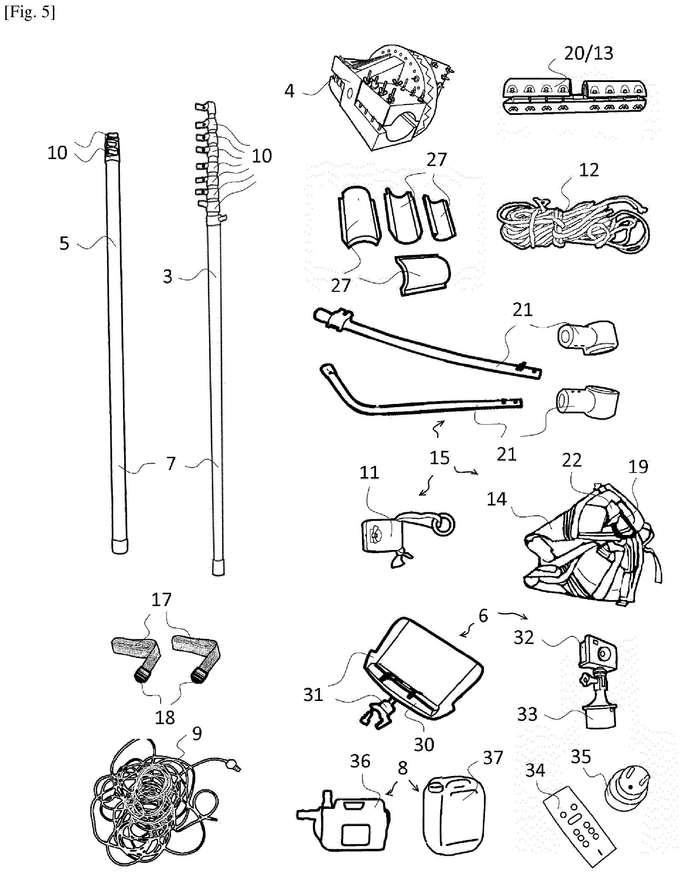

La [Fig.5] présente une vue éclatée de la présente invention.
La [Fig.6] présente une vue éclatée d'un système de fixation 4 autorisant un réglage angulaire entre le mât 5 et traverse 3 du dispositif portable de la présente invention.
La [Fig.7] présente une vue éclatée de deux variantes 23 du système de fixation 4 à 90° du mât 5 et de la traverse 3 du dispositif portable de la présente invention.

Le mât 5 et la traverse 3 du dispositif portable selon l'invention, sont tous deux de longueur variable. Le système de fixation 4 est conçu pour rendre solidaire le mât 5 et la traverse 3, ainsi qu'autoriser le réglage angulaire entre ces deux éléments. Le système de fixation 4 est fixé de préférence au minimum 50 cm sous l'extrémité supérieure du mât 5, et à 50 cm de l'extrémité arrière de la traverse 3. Cette distance est nécessaire pour que les liens obliques 12 puissent jouer pleinement leur rôle de répartition des efforts mécaniques sur la potence 1.

Pour obtenir une longueur variable du mât 5 et de la traverse 3, ces derniers sont constitués de tubes télescopiques 7 ou modulaires. La longueur d'un tube peut être comprise entre 50 cm et 400 cm. Les tubes peuvent être utilisés de façon indifférenciée sur le mât 5 ou la traverse 3. La section des tubes est de préférence et de façon non limitative circulaire. Le diamètre des tubes est compris généralement entre 1 et 10 cm. Le diamètre et l'épaisseur des tubes sont calculés en fonction de la résistance des matériaux utilisés, et de manière à ce que la flèche des tubes placés bout à bout, ne dépasse pas de préférence 10% de la longueur totale de la traverse 3. Les tubes sont de préférence en matériau composite renforcé en fibres de carbone, en raison de la légèreté et de l'excellente résistance mécanique de ce matériau. Mais de manières non limitatives pouvant être cumulatives ou alternatives, le matériau des tubes et de leurs composants peut aussi être en métal, en plastique, en céramique ou en matériau composite. La longueur totale des tubes, lorsqu'ils sont assemblés, est de préférence inférieure à 25 mètres. Lorsque le diamètre des tubes est croissant, le tube qui a la plus grande section, est réservé à l'extrémité inférieure du mât 5. Le tube à section la plus petite est réservé à l'extrémité avant de la traverse 3. La progression de la section et du diamètre des tubes entre le pied du mât 5 et le bout de la traverse 3 est donc décroissante. L'objectif de cet agencement des tubes est de réduire à la fois les contraintes mécaniques appliquées à l'intérieur des tubes de la potence 1, mais aussi les efforts supportés par l'opérateur 16. Les tubes sont rendus solidaires par des dispositifs de serrage rapide 10 et 20 connu en soi de type collier de serrage pour les tubes télescopiques 7, ou manchon de raccordement pour les tubes modulaires, réalisant une liaison par adhérence ou par obstacle entre les tubes, les dispositifs de serrage rapide 20 sur le mât 5 devant pouvoir supporter un moment mécanique autour de l'axe longitudinal de ce dernier, au moins égale au poids de la traverse 3 que multiplie sa longueur.

Les longueurs totales de la traverse 3 et du mât 5 sont calculés, en fonction de la distance qui sépare l'opérateur 16 de l'endroit où va opérer le dispositif 2, et de manière à ce que les conditions optimales d'utilisation de la potence 1 soient respectées. En fonction de ce calcul, plusieurs tubes sont raccordés ensemble pour atteindre la longueur souhaitée du mât 5 et de la traverse 3. Puis ils sont assemblés à l'aide du système de fixation 4. L'angle entre le mât 5 et la traverse 3 dans le plan longitudinal de la potence 1, est réalisé à l'aide du système de fixation 4, et calculé de manière à respecter les conditions optimales d'utilisation de la potence 1. Généralement cet angle est environ de 90°.

Exemple du traitement d'une toiture de bâtiment : Un bâtiment ayant une façade de 5 mètres de haut, une toiture à 35°, et un faitage à 8,5 mètres de haut, est traité à l'aide d'une potence 1 ayant un mât 5 de 3 mètres de long, une traverse 3 de 11 mètres de long, et équipée d'une rampe de pulvérisation 45 d' 1,5 mètres de long.

Les conditions optimales d'utilisation de la potence 1 sont fonctions du centre de gravité de la potence 1, et du mode d'utilisation de l'appareil 2. Le centre de gravité de la potence 1 doit être de préférence à l'aplomb de l'opérateur 16, afin de réduire le moment mécanique exercé par la potence 1 sur l'opérateur 16. Cette condition peut être respectée, si le poids du mât 5, et du système de fixation 4 dont les centres de gravité sont positionnés à l'arrière de l'opérateur 16, compensent le poids de la traverse 3 et de l'appareil 2, dont les centres de gravité sont positionnés à l'avant de la structure et devant de l'opérateur 16. Les conditions optimales d'utilisation de la présente invention varient aussi selon le mode d'utilisation des différents appareils 2 utilisés. Voici des exemples d'utilisation de la potence 1 dans le domaine du bâtiment, où les conditions optimales varient selon l'appareil 2 utilisé. Pour l'imperméabilisation, le traitement ou le nettoyage chimique d'une toiture, la présente invention utilisera une rampe 45 équipée de plusieurs buses de pulvérisation 44, et fixée à l'extrémité de la traverse 3. Cette dernière doit être parallèle à la surface à traiter, de manière à ce que le jet 48 des buses 44 puisse atteindre la surface à traiter de façon uniforme. Pour l'imperméabilisation, le traitement ou le nettoyage chimique d'une façade, la présente invention utilisera une torche 46 composée d'une ou plusieurs buses de pulvérisation 44, et orientées à la perpendiculaire de la surface à traiter. Pour le nettoyage haute pression d'une façade ou d'une toiture, la présente invention utilisera une torche 39 équipée d'une ou plusieurs buses haute pression orientées de préférence à la perpendiculaire de la surface à traiter. Enfin pour le nettoyage mécanique d'une toiture, d'une vitre ou d'un panneau solaire, la brosse de vitrier 40 ou 41 ou 53 ou la brosse de cantonnier 42, sont appliquées le plus plat possible sur la surface à nettoyer. Pour respecter cette condition, l'inclinaison de la tête des brosses 40 et 42 est optimisée grâce à un dispositif 50 connu en soi de réglage de l'angle d'inclinaison des brosses.

L'équipement de manutention 15 appartenant au dispositif portable de la présente invention est maintenant décrit ci-après. L'équipement de manutention 15 du dispositif portable selon l'invention est composé d'un harnais 14, d'un point d'attache inférieur 11 et supérieur 13 sur le mât 5, d'une ou plusieurs sangles 17, d'un mousqueton 19, d'un coussinet, et de deux manches directionnels 21.

Lors de l'utilisation de l'invention en exploitation, la potence 1 est portée par l'opérateur 16 à l'aide d'un harnais 14 relié à un point d'attache inférieur 11 sur le mât 5. Le plan longitudinal de la potence 1 est parallèle au plan sagittal de l'opérateur 16. Il passe par le milieu de son épaule droite, si l'opérateur 16 est droitier, et gauche s'il est gaucher. Le mât 5 est incliné vers l'arrière de l'opérateur 16, d'un angle compris entre 0° et 60° par rapport à la verticale.

L'opérateur 16 est vêtu d'un harnais 14, qui dans le dispositif selon l'invention, peut être soit un harnais-cuissard ou un harnais complet, équipé d'un point d'attache latéral 22 à gauche et à droite au niveau de la hanche de l'opérateur 16. Ce point d'attache latéral 22 droit pour les droitiers, et gauche pour les gauchers, permet d'attacher la potence 1, qui, équipée d'un point d'attache inférieur 11 situé entre 10 cm et 100 cm de l'extrémité inférieure du mât 5, est relié à l'opérateur 16 par un mousqueton 19. Ce point d'attache latéral 22 du harnais 14 permet à l'opérateur 16 de porter la majorité du poids de la potence 1. Une ou deux sangles 17, fixées au mât 5 à une extrémité au point d'attache inférieur 11, et à l'autre extrémité au point d'attache supérieur 13, ce dernier situé entre 50 cm et 150 cm au-dessus du point d'attache inférieur 11, permet principalement à l'opérateur 16, de retenir la potence 1 en rotation dans le plan longitudinal de la potence 1. La ou les sangles 17 sont placées en bandoulière, sur l'épaule gauche pour les droitiers et droite pour les gauchers. Chaque sangle 17 est équipée, d'une boucle de réglage 18 pour ajuster sa longueur en fonction de la morphologie de l'opérateur 16. Un clip sur chaque sangle 17 peut aussi permettre une attache rapide. En fonction de la longueur et de l'inclinaison de la potence 1, il n'est pas toujours possible d'avoir son centre de gravité à l'aplomb de l'opérateur 16. Dans ce cas, l'opérateur 16 doit exercer un effort pour retenir la potence 1, qui est déséquilibrée soit vers l'avant soit vers l'arrière de l'opérateur 16. Lorsque le centre de gravité de la potence 1 est situé derrière l'axe vertical de l'opérateur 16, la ou les sangles 17 vont aider l'opérateur 16 à retenir la potence 1. Lorsque le centre de gravité de la potence 1 est situé devant l'axe vertical de l'opérateur 16, et que la potence 1 tombe vers l'avant, l'épaule de l'opérateur 16 en contact avec le mât 5 va jouer le rôle de butée et retenir la potence 1. Un coussinet fixé autour du mât 5 à hauteur de l'épaule de l'opérateur 16 améliore le confort, et diminue la sensation de pression sur l'épaule de l'opérateur 16.

La potence 1 est aussi équipée de deux manches directionnels 21 pour aider l'opérateur 16 à la manoeuvrer et l'orienter. Ces deux manches directionnels 21 sont fixés au mât 5 perpendiculairement à ce dernier, à une distance maximale de 50 cm au-dessus du point d'attache inférieur 11. Ces deux manches directionnels 21 ont généralement un diamètre compris entre 10 à 60 mm, et une longueur comprise entre 30 et 80 cm. Les deux manches directionnels 21 sont fixés sur le mât 5 soit dans le même plan, soit décalé de quelques centimètres l'un de l'autre. L'angle entre les deux manches 21 est de 90° plus ou moins 30° sur un plan perpendiculaire à l'axe du mât 5. L'un des manches 21 est environ parallèle au plan longitudinal de la potence 1, et orienté vers l'avant de l'opérateur 16. L'autre manche 21 est environ parallèle au plan frontal de l'opérateur 16, orienté vers son flanc opposé, c'est-à-dire gauche pour les droitiers, et droit pour les gauchers.

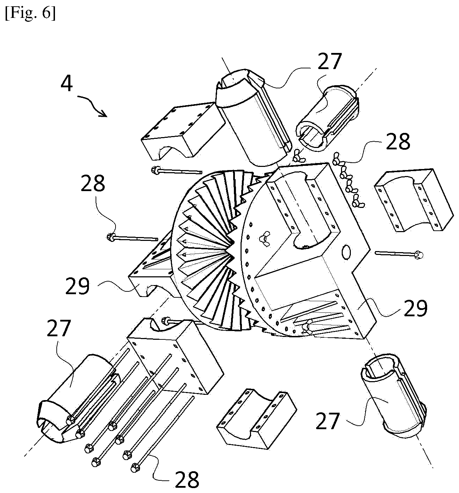

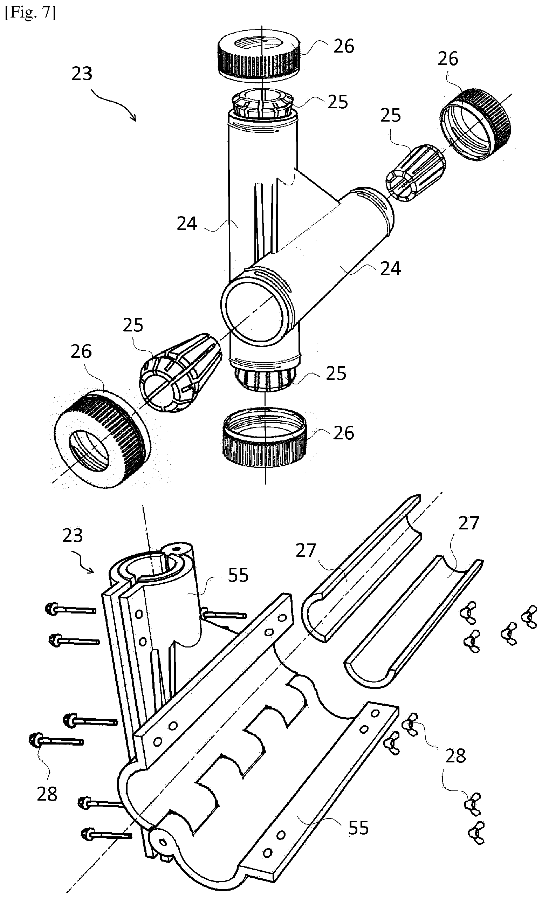

Le système de fixation 4 du dispositif portable selon l'invention, réalise la liaison encastrement entre le mât 5 et la traverse 3. Suivant des variantes préférées mais non limitatives pouvant être cumulatives ou alternatives, le système de fixation 4 peut autoriser un réglage angulaire entre le mât 5 et la traverse 3 sur 360°. L'angle choisi est celui le plus adapté pour avoir le centre de gravité de la potence 1 dans l'axe longitudinal de l'opérateur 16, quand ce dernier est debout en position de travail. L'objectif est de répartir le poids de la potence 1, autant devant que derrière l'opérateur 16. Ce dernier aura plus de facilité à manier et contrôler la potence 1 dans sa configuration de travail. Suivant des variantes préférées mais non limitatives pouvant être cumulatives ou alternatives, lorsque le système de fixation 4 autorise un réglage angulaire, il peut être réalisé par l'accouplement de deux disques 29 coaxiaux, dont leurs faces planes sont en contact, et parallèles au plan longitudinal de la potence 1. L'accouplement des disques 29 est réalisé par adhérence de leurs faces planes ou par obstacle à l'aide de cannelures, dents, griffes par exemple. Un exemple d'accouplement des disques 29 à l'aide de cannelures, est illustré à la [Fig.6]. Le réglage de l'angle d'inclinaison de la traverse 3 par rapport au mât 5 est réalisé grâce à la rotation d'un disque 29 par rapport à l'autre. Lors de l'utilisation de la potence 1 en exploitation, les deux disques 29 sont rendus solidaires au moyen d'un système vis-écrou 28 par exemple. Chaque disque 29 est aussi équipé d'un dispositif permettant d'assembler le mât 5 et la traverse 3 sur chacun des disques 29. Cette liaison peut être obtenue par adhérence ou par obstacle. Ce dispositif de fixation s'adapte aux différents diamètres de tubes de la traverse 3 et du mât 5, à l'aide par exemple, d'un jeu de demi entretoises 27 ou de pinces coniques à ressort 25 de différents diamètres intérieurs. Grâce au réglage angulaire du mât 5 et de la traverse 3, ainsi qu'à son adaptation à tous les diamètres de tubes, le système de fixation 4 offre à l'invention un champ d'application étendu, puisque la potence 1 pourra s'adapter à de nombreuses configurations de travail. Comme illustré à la [Fig.7], d'autres variantes 23 du système de fixation 4, assemblent la traverse 3 et le mât 5 selon un angle déterminé et fixe. L'angle choisi est généralement de 90°, car c'est l'angle le plus adapté pour répondre à un large panel d'applications. De la même manière, un jeu de demi entretoises 27 ou de pinces coniques à ressort 25 servent à fixer les tubes 7 de différents diamètres sur ces variantes 23 du système de fixation 4. La structure principale de ces variantes 23 peut être composée par exemple de deux cylindres solidaires 24 ou 55, où viennent se fixer les tubes télescopiques 7 ou modulaires, au moyen d'un jeu de demi entretoises 27 serrées entre deux mâchoires 55 ou de pinces coniques à ressort 25 compressées par des couvercles 26 à visser sur chaque cylindre 24.

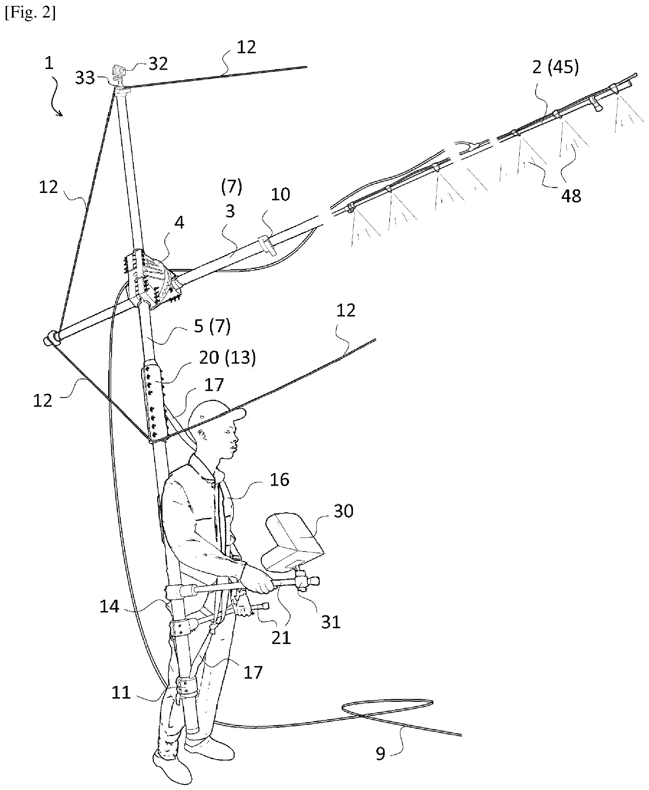

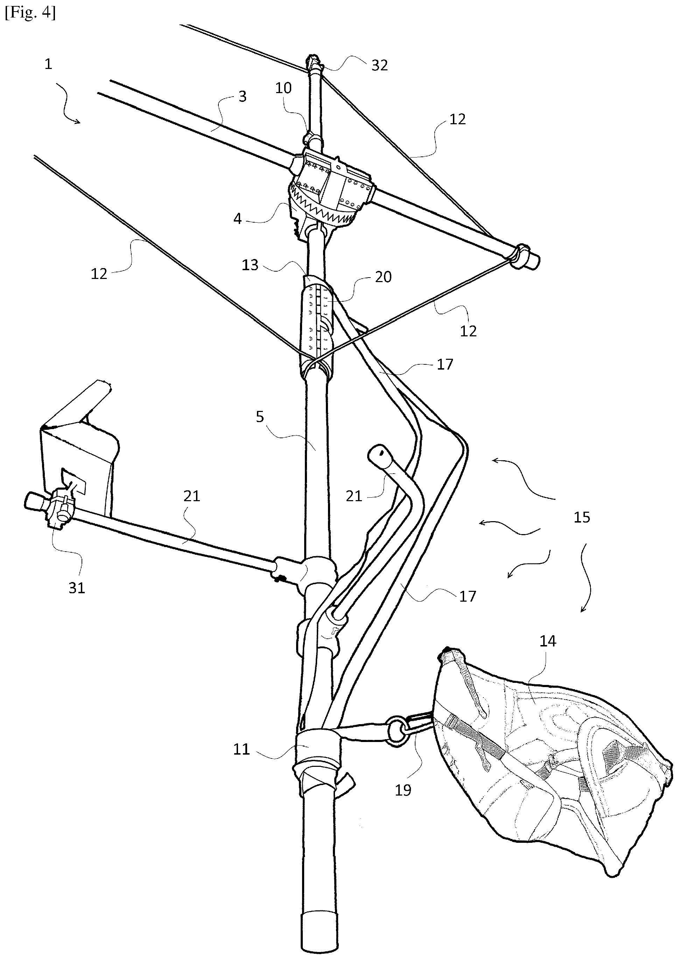

Suivant des variantes préférées mais non limitatives pouvant être cumulatives ou alternatives, les liens obliques 12 de consolidation placés en oblique entre le mât 5 et la traverse 3 sont de type console ou tirant. Lorsque des tirants 12 sont utilisés, ils sont de préférence attachés consécutivement à une extrémité, sur la partie avant de la traverse 3, au minimum aux deux tiers de sa longueur en partant du système de fixation 4, puis sur le mât 5 à son extrémité supérieure, ensuite à l'arrière de la traverse 3, puis sur le mât 5 sous le système de fixation 4 à une distance opposée de l'extrémité supérieure du mât 5 comme illustré sur les figures 2 et 4. Pour finir, les tirants sont fixés à leur autre extrémité sur la traverse 3 environ au cinquième de sa longueur en partant du système de fixation 4. Ces liens obliques 12 sont destinés à rigidifier la potence 1, ainsi qu'à réduire la flèche et les oscillations de la traverse 3 durant l'utilisation du dispositif portable de la présente invention. Les tirants sont réalisés en fils retordus ou câblés de préférence en matière plastique en raison de sa légèreté, et résistent à une tension de quelques dizaines de kilogrammes.

Le système vidéo 6 du dispositif portable selon l'invention, est composé d'un ou plusieurs écrans vidéo 30 portables (de type tablette informatique), d'une ou plusieurs caméras 32, et de leurs supports 31 et 33. Le rôle du système vidéo 6 est de permettre à l'opérateur 16 de voir l'appareil 2, et son environnement de travail sur l'écran vidéo 30. Par exemple un opérateur 16 utilisant le dispositif portable de la présente invention sur une toiture relativement haute, ne verra pas directement l'appareil de pulvérisation 38 lors du traitement, alors que le système vidéo 6 lui rendra ce service. Le ou les écrans vidéo 30 sont fixés sur la potence 1 à hauteur de l'opérateur 16, par exemple sur un des manches directionnels 21, ou porté par l'opérateur 16. La position du ou des écrans vidéo 30 est la plus ergonomique possible pour l'opérateur 16. Un compromis entre poids, taille, solidité, visibilité en extérieur et performance du ou des écrans vidéo 30 est à privilégier. La taille et la puissance lumineuse de l'écran vidéo 30 est idéalement entre 7 à 10 pouces (1 pouce = 2,54 cm) pour 1000 cd/m2. Le support 31 est équipé de préférence d'une visière pour éviter les reflets lumineux sur l'écran vidéo 30. La ou les caméras 32 sont fixées en haut du mât 5. Une caméra 32 au moins est orientée vers l'avant de la traverse 3. Un compromis entre poids, taille, solidité et performance de la ou des caméras 32 est privilégié. La ou les transmissions vidéo entre la ou les caméras 32, et le ou les écrans vidéo 30, sont réalisées de préférence par ondes hertziennes du type Wifi ou Bluetooth par exemple, mais la transmission par câbles du type USB par exemple est possible.

Le dispositif d'alimentation 8 du dispositif portable selon l'invention, est de nature différente en fonction de l'appareil 2 utilisé. Suivant des variantes préférées mais non limitatives pouvant être cumulatives ou alternatives, le dispositif d'alimentation 8 peut être une centrale d'alimentation à liquide haute ou basse pression, une centrale d'alimentation électrique, une batterie électrique, une prise de réseau électrique, une réserve de gaz sous pression ou un ordinateur par exemple. Une télécommande hertzienne 34 permet de commander à distance le dispositif d'alimentation 8 et ou l'appareil 2. Lorsque la présente invention est utilisée pour nettoyer, traiter, imperméabiliser toitures, façades et panneaux solaires, le dispositif d'alimentation 8, est composé d'au moins une pompe à liquide 36 haute ou basse pression, d'un interrupteur marche/arrêt commandé à distance par la télécommande hertzienne 34. La pompe à liquide 36 aspire du liquide à partir d'un réservoir 37 contenant un produit actif et ou par une alimentation extérieure en eau de ville par exemple. La contenance de ce réservoir 37 est généralement comprise entre 5 et 40 litres. Lorsque le dispositif portable selon la présente invention est utilisée pour nettoyer, traiter, imperméabiliser toitures, façades et panneaux solaires, suivant des variantes préférées mais non limitatives pouvant être cumulatives ou alternatives, le dispositif d'alimentation 8 peut aussi être composé de vanne(s), robinet(s), filtre(s), clapet(s) anti retour, indicateur(s) de pression, et régulateur(s) de débit.

Le circuit d'alimentation 9 du dispositif portable selon l'invention, relie le dispositif d'alimentation 8 avec l'appareil 2. Suivant des variantes préférées mais non limitatives pouvant être cumulatives ou alternatives, et en fonction de la nature des opérations réalisées et du type d'appareil 2, le circuit d'alimentation 9 peut être un tuyau, un câble électrique et une connexion informatique.

Par exemple lorsque le dispositif portable selon la présente invention est utilisée pour nettoyer, traiter, imperméabiliser toitures, façades et panneaux solaires, le circuit d'alimentation 9 est composé au moins d'un tuyau flexible principal, qui relie le dispositif d'alimentation 8 avec l'appareil 2, qui est fixé à l'extrémité avant de la traverse 3. Un raccord rapide permet de connecter le tuyau de sortie du dispositif d'alimentation 8 avec le tuyau flexible du circuit d'alimentation 9. Ce tuyau flexible court à même le sol à partir du dispositif d'alimentation 8 jusqu'au mât 5 sur une longueur de 5 à 10 mètres environ. Puis le tuyau flexible 9 est attaché au mât 5, et longe la traverse 3 jusqu'à son extrémité avant. L'ensemble des tuyaux et raccords qui composent le circuit d'alimentation 9 sont attachés le long de la potence 1 à l'aide de colliers de fixation ou de rubans scratchs. Lorsque le dispositif portable selon la présente invention est utilisée pour nettoyer, traiter, imperméabiliser toitures, façades et panneaux solaires, le circuit d'alimentation 9 est composé principalement de tuyaux flexibles ou semi rigide, et de raccords rapides ou classiques. Mais suivant des variantes préférées mais non limitatives pouvant être cumulatives ou alternatives, le circuit d'alimentation 9 peut aussi être composé de vanne(s), robinet(s), filtre(s), et indicateur(s) de pression. Les diamètres intérieurs et extérieurs des tuyaux du dispositif d'alimentation 8 et du circuit d'alimentation 9 sont calculés de manière à optimiser le débit du liquide à pulvériser, et à résister à la pression délivrée par la pompe à liquide. Le diamètre des tuyaux du circuit d'alimentation 9, est décroissant à mesure qu'ils se rapprochent de l'extrémité de la traverse 3, de manière à réduire le poids exercé par le liquide sur la potence 1, tout en conservant un débit optimisé pour le bon fonctionnement de l'appareil 2. Lorsque l'appareil 2 est une rampe de pulvérisation 45, le tuyau flexible principal 9 est raccordé à sa terminaison à un ensemble de tuyaux secondaires 43 qui alimentent les buses de pulvérisation 44 de la rampe 45. Le schéma de distribution des tuyaux secondaires 43 est du type arborescent, de manière à répartir un débit de liquide le plus identique possible sur chaque buse 44. Lorsque l'opérateur 16 actionne l'interrupteur marche/arrêt 35 manuellement ou à distance à l'aide de la télécommande 34, la pompe à liquide 36 est actionnée, et alimente avec un liquide approprié aux travaux à réaliser le circuit d'alimentation 9, qui à son tour alimente l'appareil 2. Le liquide injecté par la pompe à liquide 36 dans le circuit d'alimentation 9 est fonction des travaux à réaliser. Pour des travaux de démoussage, le liquide est un produit de démoussage contenu dans le réservoir 37 du dispositif d'alimentation 8. Pour des travaux d'imperméabilisation, le liquide est un produit d'imperméabilisation contenu dans le réservoir 37 du dispositif d'alimentation 8. Pour des travaux de nettoyage haute ou basse pression, le liquide est de l'eau seule ou additionnée éventuellement d'un produit de nettoyage. Le produit de nettoyage contenu dans le réservoir 37, est additionné à l'eau par un système de dosage approprié.

L'appareil 2 du dispositif portable selon l'invention, est un appareil réalisant à distance les tâches pour lesquelles il a été conçu. Lorsqu'il est fixé à l'extrémité de la traverse 3, l'appareil 2 est suffisamment léger pour exercer sur l'opérateur, un moment mécanique de préférence inférieur à 10 daN.m. Il est muni d'un manche, qui lui permet de se fixer à l'extrémité avant de la traverse 3, à l'aide d'un dispositif de serrage 10 généralement identique à celui des tubes de la potence 1. L'appareil 2 peut être un outil, un mécanisme, une machine, un instrument, un dispositif, et suivant des variantes préférées mais non limitatives pouvant être cumulatives ou alternatives, de type outil de nettoyage, organe de saisie, machine-outil, instrument de mesure ou de contrôle, dispositif de projection ou de pulvérisation, appareil d'enregistrement.

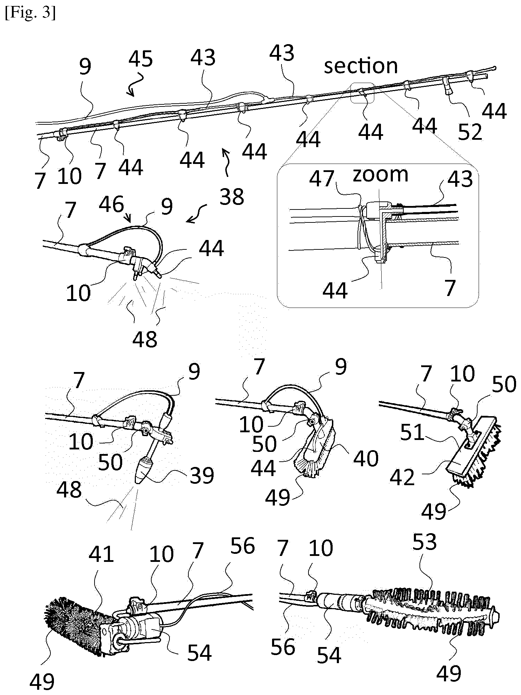

Lorsque le dispositif portable selon la présente invention est utilisée pour nettoyer, traiter, imperméabiliser toitures, façades et panneaux solaires de bâtiment, et suivant des variantes préférées mais non limitatives pouvant être cumulatives ou alternatives, les appareils 2 de la sont : comme illustré à la [Fig.3] des appareils de pulvérisation 38 pour l'application de produits liquides, un appareil de nettoyage haute-pression 39, une brosse de vitrier fixe 40 ou rotative 41, et une brosse de cantonnier fixe 42 ou rotative.

L'appareil de pulvérisation 38 d'une variante d'un dispositif portable selon l'invention pour l'application de produits liquides sur une toiture ou une façade, est composé lui-même de deux variantes. La première variante est une rampe de pulvérisation 45, la seconde est une torche de pulvérisation 46, toutes deux équipées de buses de pulvérisation. Leur destination et leur forme sont différentes. La rampe de pulvérisation 45 est adaptée aux traitements des toitures. La torche de pulvérisation 46 est plutôt destinée aux traitements des surfaces difficiles d'accès en toiture ou des façades. La rampe de pulvérisation 45, et la torche de pulvérisation 46 sont fixées à l'extrémité avant de la traverse 3 à l'aide d'un dispositif de serrage 10 généralement identique à celui des tubes.

La rampe de pulvérisation 45 suit le prolongement de la traverse 3. Leurs axes longitudinaux sont confondus. La rampe de pulvérisation 45 est constituée d'un ou plusieurs tronçons de tubes généralement de même manufacture que la traverse 3. De façon non limitative, la longueur de la rampe de pulvérisation 45 est comprise entre 50 et 400 cm. Les règles de conception de la rampe de pulvérisation 45 sont identiques à celles des tubes de la potence 1. Les buses de pulvérisation 44 sont fixées sur la rampe de pulvérisation 45 ou la torche de pulvérisation 46 à l'aide de systèmes de fixation à vis, à clip, à pince ou à collier, ou bien tout simplement à l'aide d'anneaux élastiques 47. Dans ce cas les buses traversent la rampe 45, grâce à un trou traversant de diamètre légèrement supérieur de quelques dixièmes de millimètre au diamètre extérieure de la buse. L'anneau élastique 47 forme un huit autour de la section de la rampe 45 comme illustré sur le zoom de la [Fig.3]. Chaque extrémité du huit de l'anneau élastique 47 vient entourer l'extrémité de la buse 44. Les buses de pulvérisation 44 ont un jet conique 48 plein, dont l'angle est compris entre 120° et 30°. La pression d'alimentation des buses est comprise entre 2 et 10 bars. Les jets 48 sont orientés perpendiculairement à l'axe de la rampe 45 dans la même direction. La distance qui sépare chaque buse, permet un léger recouvrement des jets 48 environ à 50 cm de distance de la rampe 45. Le débit de chaque buse est calculé en fonction du nombre de buses par mètre linéaire de rampe 45. Pour que l'avancé de l'opérateur 16 le long du bâtiment lors du traitement, ne soit ni trop rapide ni trop lente, un débit de 0,33 à 0,05 litre par seconde et mètre linéaire de rampe 45, est privilégié. Par exemple, pour une rampe 45 équipée de quatre buses par mètre linéaire, un débit compris entre 0,0825 et 0,0125 litre par seconde est privilégié pour chaque buse. Pour pulvériser un produit de traitement sur une toiture, l'opérateur 16 porte la potence 1, et oriente la traverse 3 parallèlement à la rive du bâtiment. L'opérateur 16 place la rampe de pulvérisation 45, 50 cm environ au-dessus du faitage de toiture. L'opérateur 16 actionne la pompe à liquide 36, pour pulvériser le produit de traitement. Ensuite l'opérateur 16 se déplace parallèlement au faîtage de la toiture, afin de traiter une surface équivalente à la longueur de toiture fois la longueur de rampe de pulvérisation 45. L'opérateur 16 renouvelle son opération, soit en s'éloignant du bâtiment d'une longueur équivalente à la longueur de la rampe de pulvérisation 45, soit en réduisant la longueur de la traverse 3 de cette même longueur. L'opérateur 16 renouvelle cette opération tant que le pan de toiture n'a pas été traité dans son intégralité. Puis l'opérateur 16 recommence l'opération de l'autre côté du pan de toit s'il existe.

Pour la torche de pulvérisation 46, le jet 48 de chaque buse 44 est orienté de sorte que l'ensemble des jets 48 forme un cône plein proche de 130°. L'axe du cône est orienté entre le prolongement de l'axe de la traverse 3 et sa perpendiculaire. Un dispositif connu en soi peut autoriser un réglage de l'orientation des jets 48. Le débit des buses 44 est proche de ceux de la rampe de pulvérisation 45. Pour utiliser la torche de pulvérisation 46, l'opérateur 16 approche les buses de pulvérisation à environ 50cm de la surface à traiter, et balaye toute la surface.

La torche de nettoyage haute-pression 39 d'une variante d'un dispositif portable selon l'invention, est conçue à l'identique de la torche de pulvérisation 46 en tenant compte du fait que la pression d'alimentation est de 100 bars environ. La conception des buses, raccords et tuyaux flexibles est renforcé en conséquence. La forme et la puissance du jet 48 est fonction du type d'application de la torche 39.

Comme illustré à la [Fig.3], la brosse de vitrier d'une variante d'un dispositif portable selon l'invention, peut être fixe 40 ou rotative 41. Elle est constituée de filaments 49 fixés sur une monture 51. Lorsque la brosse de vitrier est fixe 40, la forme de sa monture 51 est plutôt rectangulaire longue, mince, étroite et plate, et les filaments 49 sont fixés sur l'une de ses faces les plus grandes. La matière et dimensions de ses filaments 49 sont identiques à ceux des brosses de vitrier connues. La brosse de vitrier 40 est munie d'un manche, qui lui permet de se fixer à l'extrémité avant de la traverse 3, à l'aide d'un dispositif de serrage 10 généralement identique à celui des tubes de la potence 1. Le manche est équipé d'un dispositif 50 qui permet de régler l'inclinaison de la brosse 40 par rapport à la traverse 3, pour que les filaments 49 soient uniformément répartis sur la surface à brosser. Des buses de pulvérisation 44 sont fixées sur la monture 51. Leurs jets arrosent la surface à brosser avec le produit de nettoyage, qui circule dans le circuit d'alimentation 9. Lorsque la brosse de vitrier est rotative 41, la forme de la monture 51 est cylindrique, longue et mince, et les filaments 49 sont montés sur toute la surface cylindrique de la monture. La monture 51 tourne autour de son axe, perpendiculairement ou parallèlement à l'axe de la traverse 3 à l'aide d'un motoréducteur électrique 54. Ce dernier est alimenté par un fil électrique 56 qui court le long de la traverse 3, jusqu'à la source d'alimentation électrique 8 qui se trouve au sol.

La brosse de cantonnier 42 d'une variante d'un dispositif portable selon l'invention, est de conception identique à celle des brosses de vitrier fixe 40 et rotative 41, à l'exception de la matière et des dimensions de ses filaments 49, qui seront plus rigides, à la manière connue des brosses de cantonnier.

Une ou plusieurs protections 52, ayant par exemple la forme d'un cylindre de longueur 2 cm minimum perpendiculaire à l'axe longitudinal de la traverse 3 sont fixées par des moyens connus, le long de la traverse 3, et orientées vers la partie de bâtiment à traiter ou à nettoyer. L'extrémité du cylindre de la protection 52 est munie d'un tampon en caoutchouc par exemple pour protéger la traverse 3 des chocs avec le toit, lorsque la traverse 3 oscille.

Chacun des éléments constitutifs du dispositif portable de l'invention est suffisamment solides pour ne pas subir de déformation irréversible sous l'effet des charges d'exploitation. Mais aussi chaque élément constitutif du dispositif portable de l'invention, doit être suffisamment léger pour que la somme de leur poids n'exerce pas d'efforts excessifs sur l'opérateur 16. Donc un compromis entre légèreté, taille, solidité et performance des éléments constitutifs de la présente invention, doit être trouvé. Le poids de la potence 1 et de ses équipements est de préférence inférieur à 10 kg. Le moment mécanique exercé par la potence 1 sur l'opérateur 16, n'excède pas de préférence 10 daN.m.

Lorsque le dispositif portable selon la présente invention est utilisée pour nettoyer, traiter, imperméabiliser toitures, façades et panneaux solaires, les tuyaux, raccords, buses de pulvérisation 44 du circuit d'alimentation 9 et de l'appareil 2 résistent à la pression délivrée par la pompe à liquide 36, sont chimiquement compatibles avec les liquides de traitement, et sont le plus léger possible. Suivant des variantes préférées mais non limitatives pouvant être cumulatives ou alternatives, les matériaux composants les tuyaux, raccords du circuit d'alimentation 9 et les buses de pulvérisation 44, ainsi que leurs constituants, peuvent être en plastique, en métal ou en matériau composite.

On entend par « potence », une structure porteuse faite au minimum d'un mât et d'une traverse, dont l'axe longitudinal est placé de manière à former un angle différent de 0° avec l'axe du mât.

On entend par « appareil », un assemblage de pièces, d'organes, d'instruments, d'outils, et de dispositifs réunis en un tout, et employés pour mener à bien une tâche comme exécuter un travail, observer un phénomène, ou prendre des mesures.

On entend par tubes « télescopiques », un ensemble de tubes qui s'emboîtent et coulissent les uns dans les autres. Un ensemble de dispositifs de serrage rapide permettent de fixer les tubes entre eux.

On entend par « dispositif de serrage rapide », un collier de serrage rapide munis de poignée avec levier à came par exemple, ou une pince de serrage, ou un collet ressort ou tout autre dispositif qui permet d'immobiliser deux tubes entre eux.

On entend par tubes « modulaires », un ensemble de tubes généralement de même diamètre extérieur, qui s'assemblent les uns à la suite des autres par leurs extrémités. Un ensemble de manchons internes ou externes de raccordement permettent de raccorder plusieurs tubes entre eux.

On entend par « manchons de raccordement », une courte portion de tube épais fixé par collage, pincement ou vissage à l'extrémité de deux tubes, et permettant de raccorder et immobiliser ces deux tubes entre eux.

On entend par « produit de nettoyage », un produit liquide composé d'un ou plusieurs agents actifs présentant des propriétés de détergence, germicides, bactéricides, antistatiques, etc.

On entend par « produit de démoussage » ou « produit de traitement anti-mousse », un produit liquide généralement fongicide, bactéricide et algicide qui détruit les mousses végétales, lichens et algues fixés sur les matériaux sur lesquels il est appliqué.

On entend par « produit hydrofuge » ou « produit d'imperméabilisation », un produit liquide destiné à protéger de l'humidité les matériaux sur lesquels il est appliqué.

On entend par « brosse de vitrier », une brosse équipée de pulvérisateurs pour projeter à distance un produit de nettoyage, et spécialement conçue pour laver les vitrages de bâtiment sans les rayer.

On entend par « brosse de cantonnier », une brosse de nettoyage constitué d'un manche, et d'un support où est fixée une multitude de brins solides et épais.

On entend par « pompe à liquide », un dispositif permettant d'aspirer et de refouler un liquide.

On entend par « interrupteur marche/arrêt » un organe de commande à distance ou non qui permet d'ouvrir et de fermer un circuit alimentant un appareil électrique.

On entend par « télécommande hertzienne », un dispositif, généralement de taille réduite, servant à en piloter un autre à distance, par ondes radio ou Bluetooth.

On entend par « collier de fixation », un système qui vient à la fois se fixer sur un cylindre au moyen d'un collier de serrage, et tenir un autre dispositif par exemple pour rendre solidaire un tube et un tuyau.

On entend par « demi entretoise », deux demi-tubes qui relient deux pièces, l'une concave et l'autre convexe, et qui les maintiennent dans un écartement fixe.

On entend par « pince conique à ressort », une pièce tubulaire et élastique dont la forme interne est cylindrique et la forme externe conique, qui sert à immobiliser une pièce convexe dans une pièce concave, par rétrécissement du diamètre interne sur la pièce convexe, et compression par coincement du cône externe de la pince à ressort sur la pièce concave.

On entend par « ruban scratch », un ruban auto-adhésif composé de deux bandes de textile recouvertes chacune d'une texture différente permettant, lorsqu'on les met en contact, d'obtenir une liaison amovible.

On entend par « anneau élastique », un fil, une bande ou un ruban court(e) (de quelques centimètres) en caoutchouc, de forme généralement circulaire.

On entend par « harnais-cuissard », un ensemble fait de sangles et de boucles que l'on installe au niveau du bassin et de la taille, et munies d'un ou plusieurs points d'attache.

On entend par « harnais complet », un harnais-cuissard qui a en plus un ensemble de sangles au niveau de la poitrine, munies de points d'attache dorsal et sternal.

On entend par « point d'attache », généralement un anneau, maillon demi-rond ou mousqueton métallique ou plastique permettant d'y attacher une corde ou un équipement de travail.

On entend par « bandoulière », une façon de positionner une sangle, un ruban ou une lanière, qui va d'une épaule au flanc opposé d'un individu.

On entend par « coussinet », un dispositif en étoffe rembourrée, en cuir, etc., destiné à éviter des frottements, et diminuer la pression de surface.

On entend par « boucle de réglage », un passant double ou simple ou anneau de cuir, de métal, de plastique, fixe ou coulissant, qui sert à maintenir l'extrémité libre d'une ceinture ou d'une courroie après qu'elle soit sortie de la boucle. Elle sert au réglage et à l'ajustement de sangle.

On entend par « clip », une boucle muni d'une pince à ressort qui permet d'attacher rapidement deux extrémités de sangle.

On entend par « manche », un tube ou un rond plus ou moins droit, généralement de section circulaire en métal, en bois, en plastique, etc. dont la longueur est généralement 10 fois supérieure à sa section, par lequel on tient un outil lorsqu'on l'utilise.

On entend par « liaison encastrement », ou « liaison fixe », une liaison mécanique qui ne permet aucune mobilité.

On entend par « plan longitudinal », le plan (également appelé « plan sagittal ») qui divise le corps humain ou un objet en parties droite et gauche. Le plan est au centre du corps ou de l'objet et le divise en deux moitiés généralement symétriques.

On entend par « plan frontal » (également appelé « plan coronal »), le plan vertical qui divise le corps en sections ventrale et dorsale (ventre et dos).

On entend par « axe longitudinal » d'un opérateur, la droite d'intersection de son plan sagittal et de son plan coronal.

On entend par « lien oblique », un élément du type console ou tirant, fixé en oblique entre deux éléments principaux d'une structure, pour renforcer et consolider cette dernière.

On entend par « console », un organe rigide en saillie de formes diverses, qui soutient un élément généralement horizontal, et destiné à porter une charge. La console s'inscrit dans un triangle rectangle dont l'hypoténuse délimite son côté libre.

On entend par « tirant », un câble ou une barre servant à assurer la rigidité d'une construction, ou à soutenir la flèche d'une longue structure.

On entend par « avant de traverse » 3, la partie de traverse la plus longue par rapport au système de fixation 4, et qui reçoit les appareils 2.

On entend par « arrière de traverse » 3, la partie de traverse opposée à sa partie avant par rapport au système de fixation 4.

On entend par « système vidéo » avec ou sans fil, un système de caméra(s), de transmission d'images et de restitution de celles-ci à partir d'un signal électrique.

## Revendications

1. Dispositif portable comprenant une extrémité avant à laquelle peut être fixé un appareil (2) pour réaliser des tâches à distance, tel que le dispositif portable comprend une potence (1) et un équipement de manutention (15) fixé sur un mât de la potence (1), l'extrémité avant du dispositif étant une extrémité d'une traverse (3) de la potence (1), la traverse étant fixée au mât à l'aide d'un système de fixation (4) réalisant un encastrement entre le mât (5) et la traverse (3), le système de fixation (4) étant fixé à une distance sous l'extrémité supérieure du mât (5), **caractérisé en ce que** la traverse (3) est constituée de tubes télescopiques (7) ou modulaires, ladite distance étant pour que des liens obliques (12), répartissent des efforts mécaniques sur la potence (1), le mât (5) et la traverse (3) étant fixés l'un à l'autre par lesdits liens obliques (12) pour consolidation placés entre le mât (5) et la traverse (3), attachés à une extrémité des liens, sur la partie avant de la traverse (3), puis sur le mât (5) à son extrémité supérieure.

2. Dispositif portable selon la revendication 1, **caractérisé en ce que** le système de fixation (4) autorise un réglage angulaire entre le mât (5) et la traverse (3), par accouplement de deux disques coaxiaux (29), par adhérence ou à l'aide de cannelures, dents ou griffes, et une solidarisation par un système vis-écrou (28), jeu de demi entretoises (27) ou de pinces coniques à ressort (25) de différents diamètres intérieurs permettant d'assembler le mât (5) et la traverse (3) sur chacun des disques coaxiaux (29), ou le système de fixation (23) assemble la traverse (3) et le mat (5) selon un angle déterminé et fixe en ayant une structure principale qui est composée de deux cylindres solidaires (24 ; 55), où se fixent les tubes télescopiques (7) ou modulaires au moyen d'un jeu de demi entretoises (27) serrées entre deux mâchoires (55) ou de pinces coniques à ressort (25) compressées par des couvercles (26) vissés sur chaque cylindre (24).

3. Dispositif portable selon la revendication 1 ou la revendication 2, **caractérisé en ce que** le mât (5) et la traverse (3) sont fixés l'un à l'autre par des liens obliques (12) de consolidation, de type console ou tirants, placés entre le mât (5) et la traverse (3), attachés consécutivement à une extrémité, sur la partie avant de la traverse (3), au minimum aux deux tiers de sa longueur en partant du système de fixation (4), puis sur le mât (5) à son extrémité supérieure, ensuite à l'arrière de la traverse (3), puis sur le mât (5) sous le système de fixation (4) à une distance opposée de l'extrémité supérieure du mât (5), et pour finir, le ou les tirants sont fixés à leur autre extrémité sur la traverse (3) environ au cinquième de sa longueur en partant du système de fixation (4).

4. Dispositif portable selon l'une des revendications 1 à 3, **caractérisé en ce que** l'équipement de manutention (15) est composé d'un harnais (14), cuissard ou complet, de points d'attache au mât inférieur (11) et supérieur (13), d'une ou plusieurs sangles (17), d'un mousqueton (19), d'un coussinet fixé autour du mât à hauteur d'épaule, et de deux manches directionnels (21) perpendiculaires au mât (5), l'un des manches directionnels (21) étant orienté vers l'avant d'un opérateur (16) du dispositif portable, l'autre manche directionnel (21) étant orienté vers la gauche pour un opérateur droitier, et la droite pour un opérateur gaucher, chaque sangle (17) étant équipée d'une boucle de réglage (18) pour ajuster sa longueur en fonction de la morphologie de l'opérateur.

5. Dispositif portable selon l'une des revendications 1 à 4, **caractérisé en ce que** le mât (5) est également constitué de tubes télescopiques (7) ou modulaires.

6. Dispositif portable selon l'une des revendications 1 à 5, **caractérisé en ce que** lesdits tubes télescopiques (7) ou modulaires sont en matériau composite en fibres de carbone, en métal, en plastique, en céramique ou en matériau composite, et sont rendus solidaires par des dispositifs de serrage (10 ; 20) de type collier de serrage (10) pour les tubes télescopiques ou manchon de raccordement (20) pour les tubes modulaires, réalisant une liaison par adhérence ou obstacle.

7. Dispositif portable selon l'une des revendications 1 à 6, **caractérisé en ce que** la potence (1) est équipée d'un système vidéo (6) pour l'opérateur, composé d'un écran vidéo portable (30), d'une caméra (32) en haut du mât (5) et de leurs supports (31, 33), avec transmission entre l'écran et la caméra par ondes hertziennes du type Wifi ou Bluetooth ou par câble du type USB.

8. Dispositif portable selon l'une des revendications 1 à 7, **caractérisé en ce qu'**il comprend une protection (52) de la partie avant de la traverse (3) ayant la forme d'un cylindre perpendiculaire à l'axe longitudinal de la traverse (3) dont l'extrémité est munie d'un tampon en caoutchouc.

9. Utilisation d'un dispositif portable selon l'une des revendications 1 à 8, **caractérisée en ce que** l'appareil (2) est une rampe de pulvérisation (45) à plusieurs buses pour traitement de toitures, une torche de pulvérisation (46), une brosse de cantonnier (42), une brosse de vitrier (40 ; 41 ; 53), une torche de nettoyage haute pression (39) ou un outil, un instrument ou une machine, outil de nettoyage, organe de saisie, machine-outil, instrument de mesure ou de contrôle, appareil d'enregistrement ou un appareil de traitement ou de nettoyage de toiture, façade, vitre ou panneau solaire, le dispositif portable étant utilisé pour des travaux à distance de nettoyage, traitement, imperméabilisation de toitures, façades, vitres, panneaux solaires, ou utilisation à distance d'appareils photographiques dans des lieux inaccessibles, ou utilisation à distance d'instruments de mesure et de contrôle au-dessus de l'ouverture de réservoirs de produit dangereux.

10. Utilisation d'un dispositif portable selon la revendication 9, **caractérisée en ce que** l'appareil (2) est autonome ou relié à un dispositif d'alimentation (8) en liquide haute ou basse pression, une centrale d'alimentation électrique, une batterie électrique, une prise de réseau électrique, une réserve de gaz sous pression ou un ordinateur, à l'aide d'un circuit d'alimentation (9) qui peut comprendre un tuyau, un câble électrique (56) et une connexion informatique.

11. Utilisation d'un dispositif portable selon la revendication 9 ou la revendication 10, **caractérisé en ce que** l'appareil (2) est équipé d'un manche, qui se fixe à l'extrémité avant de la traverse (3) à l'aide d'un système de serrage (10).

12. Utilisation d'un dispositif portable selon l'une des revendications 9 à 11, **caractérisée en ce que** la potence (1) est portée par l'opérateur (16), le plan longitudinal de la potence (1) étant parallèle au plan sagittal de l'opérateur (16), passant par le milieu de son épaule droite, si l'opérateur (16) est droitier, et gauche s'il est gaucher, le mât (5) étant incliné vers l'arrière de l'opérateur (16), d'un angle compris entre 0° et 60° par rapport à la verticale.

## Patentansprüche

1. Tragbares Gerät mit einem vorderen Ende, an dem ein Gerät (2) zum Ausführen von Aufgaben aus der Ferne angebracht werden kann, so dass das tragbare Gerät eine Halterung (1) und Handhabungsgeräte (15) umfasst, die an einem Mast der Halterung (1) befestigt sind, wobei das vordere Ende des Geräts ein Ende eines Querstücks (3) der Halterung (1) ist, wobei das Querstück unter Verwendung eines Befestigungssystems (4) am Mast befestigt ist, das eine Einbettung zwischen dem Mast (5) und dem Querstück (3) ermöglicht, wobei das Befestigungssystem (4) in einem Abstand unter dem oberen Ende des Mastes (5) angebracht ist, **dadurch gekennzeichnet, dass** das Querstück (3) aus Teleskoprohren (7) oder modularen Rohren besteht, wobei der Abstand so bemessen ist, dass schräge Verbindungen (12) mechanische Kräfte auf die Halterung (1) verteilen, wobei der Mast (5) und das Querstück (3) durch die schrägen Verbindungen (12) zur Konsolidierung aneinander befestigt sind, die zwischen dem Mast (5) und dem Querstück (3) angeordnet sind, wobei ein Ende der Verbindungen am vorderen Teil des Querstücks (3) und dann an seinem oberen Ende am Mast (5) befestigt sind.

2. Tragbares Gerät nach Anspruch 1, **dadurch gekennzeichnet, dass** das Befestigungssystem (4) eine Winkeleinstellung zwischen dem Mast (5) und der Traverse (3) durch Kopplung zweier koaxialer Scheiben (29), durch Adhäsion oder durch Verwendung von Keilwellen oder Zähnen ermöglicht oder Klauen, und Befestigung durch ein Schrauben-Mutter-System (28), einen Satz halber Abstandshalter (27) oder konische Federklemmen (25) mit unterschiedlichen Innendurchmessern, die die Montage des Mastes (5) und des Querstücks (3) ermöglichen Jede der koaxialen Scheiben (29) oder das Befestigungssystem (23) verbindet die Traverse (3) und den Mast (5) in einem bestimmten und festen Winkel, indem sie eine Hauptstruktur aufweist, die aus zwei integralen Zylindern (24; 55) besteht. , wobei die Teleskop- oder Modulrohre (7) mittels eines Satzes von halben Abstandhaltern (27), die zwischen zwei Backen (55) geklemmt sind, oder konischen Federklemmen (25), die durch auf jeden Zylinder (24) aufgeschraubte Abdeckungen (26) zusammengedrückt werden, befestigt werden.

3. Tragbares Gerät nach Anspruch 1 oder Anspruch 2, **dadurch gekennzeichnet, dass** der Mast (5) und die Traverse (3) durch schräge Verbindungsglieder (12) vom Typ Konsole oder Zuganker miteinander verbunden sind, die zwischen dem Mast (5) und dem Querträger (3) angebracht sind, und der Querträger (3), der an einem Ende nacheinander am vorderen Teil des Querträgers (3) befestigt ist, und zwar auf mindestens zwei Dritteln seiner Länge, beginnend mit dem Befestigungssystem (4), und dann am oberen Ende des Masts (5). Ende, dann an der Rückseite des Querträgers (3), dann am Mast (5) unter dem Befestigungssystem (4) in einem entgegengesetzten Abstand zum oberen Ende des Masts (5) und schließlich die Zugstange(n), sind mit ihrem anderen Ende etwa auf einem Fünftel ihrer Länge ausgehend vom Befestigungssystem (4) an der Traverse (3) befestigt.

4. Tragbares Gerät nach einem der Ansprüche 1 bis 3, **dadurch gekennzeichnet, dass** die Handhabungsausrüstung (15) aus einem kurzen oder vollständigen Gurt (14) mit Befestigungspunkten am unteren Mast (11) und oberen Mast (13) besteht oder mehrere Gurte (17), einen Karabiner (19), ein auf Schulterhöhe um den Mast befestigtes Polster und zwei Richtungshülsen (21) senkrecht zum Mast (5), wobei einer der Richtungsstäbe (21) auf den gerichtet ist vor einem Bediener (16) des tragbaren Geräts, wobei der andere Richtungshebel (21) bei einem rechtshändigen Bediener nach links und bei einem linkshändigen Bediener nach rechts ausgerichtet ist, wobei jeder Riemen (17) mit einem ausgestattet ist Einstellschnalle (18) zur Anpassung der Länge an die Morphologie des Bedieners.

5. Tragbares Gerät nach einem der Ansprüche 1 bis 4, **dadurch gekennzeichnet, dass** der Mast (5) ebenfalls aus Teleskop- oder Modulrohren (7) besteht.

6. Tragbares Gerät nach einem der Ansprüche 1 bis 5, **dadurch gekennzeichnet, dass** die Teleskop- oder Modulrohre (7) aus Kohlefaserverbundwerkstoff, Metall, Kunststoff, Keramik oder Verbundwerkstoff bestehen und durch Klemmvorrichtungen (10; 20) fest verbunden sind vom Typ Klemme (10) für Teleskoprohre oder Verbindungsmuffe (20) für Modulrohre, die eine Verbindung durch Adhäsion oder Hindernis herstellen.

7. Tragbares Gerät nach einem der Ansprüche 1 bis 6, **dadurch gekennzeichnet, dass** die Halterung (1) mit einem Videosystem (6) für den Bediener ausgestattet ist, bestehend aus einem tragbaren Videobildschirm (30), einer Kamera (32) an der Oberseite des Masts (5) und ihrer Stützen (31, 33), mit Übertragung zwischen dem Bildschirm und der Kamera über drahtlose Wellen vom Typ Wifi oder Bluetooth oder über ein USB-Kabel.

8. Tragbares Gerät nach einem der Ansprüche 1 bis 7, **dadurch gekennzeichnet, dass** es einen Schutz (52) des vorderen Teils des Querträgers (3) aufweist, der am Ende die Form eines Zylinders aufweist, der senkrecht zur Längsachse des Querträgers (3) verläuft davon ist mit einem Gummipuffer ausgestattet.

9. Verwendung eines tragbaren Gerätes nach einem der Ansprüche 1 bis 8, **dadurch gekennzeichnet, dass** das Gerät (2) ein Spritzgestänge (45) mit mehreren Düsen zur Behandlung von Dächern, ein Sprühdüse (46), eine Straßenbesenbürste (42), eine Glaserbürste (40; 41; 53), ein Hochdruck-Reinigungsdüse (39) oder ein Werkzeug, ein Instrument oder eine Maschine, Reinigungswerkzeug, Greiforgan, Werkzeugmaschine, Mess- oder Kontrollinstrument, Registriergerät oder ein Gerät für Behandlung oder Reinigung eines Dachs, einer Fassade, eines Fensters oder einer Solaranlage, wobei das tragbare Gerät zur Fernreinigung, Behandlung, Abdichtung von Dächern, Fassaden, Fenstern, Sonnenkollektoren oder zur Fernnutzung von Kameras an unzugänglichen Orten oder zur Fernnutzung von Mess- und Prüfgeräten verwendet wird Kontrollinstrumente über der Öffnung von Gefahrstofftanks.

10. Verwendung eines tragbaren Geräts nach Anspruch 9, **dadurch gekennzeichnet, dass** das Gerät (2) autonom ist oder an eine Hoch- oder Niederdruck-Flüssigkeitsversorgungseinrichtung (8), ein Netzteil, eine Batteriesteckdose, eine Druckgasversorgung oder dergleichen angeschlossen ist einen Computer, der einen Stromkreis (9) verwendet, der ein Rohr, ein elektrisches Kabel (56) und einen Computeranschluss umfassen kann.

11. Verwendung eines tragbaren Geräts nach Anspruch 9 oder 10, **dadurch gekennzeichnet, dass** das Gerät (2) mit einem Griff ausgestattet ist, der über ein Klemmsystem (10) am vorderen Ende des Querträgers (3) befestigt wird.

12. Verwendung eines tragbaren Geräts nach einem der Ansprüche 9 bis 11, **dadurch gekennzeichnet, dass** der Halterung (1) vom Bediener (16) getragen wird, wobei die Längsebene des Halterungs (1) parallel zur Sagittalebene des Bedieners verläuft ( 16), der durch die Mitte seiner rechten Schulter verläuft, wenn der Bediener (16) Rechtshänder ist, und links, wenn er Linkshänder ist, wobei der Mast (5) zur Rückseite des Bedieners (16) hin geneigt ist einen Winkel zwischen 0° und 60° relativ zur Vertikalen.

## Claims

1. Portable device comprising a front end to which a device (2) for carrying out remote tasks can be attached, such that the portable device comprises a bracket (1) and handling equipment (15) fixed to a mast of the bracket (1), the front end of the device being one end of a crosspiece (3) of the bracket (1), the crosspiece being fixed to the mast using a fixing system (4) providing an embedding between the mast (5) the crosspiece (3), the fixing system (4) being fixed at a distance below the upper end of the mast (5), **characterized in that** the crosspiece (3) consists of telescopic tubes (7) or modular, said distance being so that oblique links (12) distribute mechanical forces on the bracket (1), the mast (5) and the crosspiece (3) being fixed to each other by said oblique links (12) for consolidation placed between the mast (5) and the crosspiece (3), attached to one end of the links, on the front part of the crosspiece (3), then on the mast (5) at its upper end.

2. Portable device according to claim 1, **characterized in that** the fixing system (4) allows angular adjustment between the mast (5) and the crosspiece (3), by coupling of two coaxial discs (29), by adhesion or by using splines, teeth or claws, and securing by a screw-nut system (28), set of half spacers (27) or conical spring clamps (25) of different internal diameters allowing the mast (5) and the crosspiece (3) to be assembled on each of the coaxial discs (29), or the fixing system (23) assembles the crosspiece (3) and the mast (5) at a determined and fixed angle by having a main structure which is composed two integral cylinders (24; 55), where the telescopic or modular tubes (7) are fixed by means of a set of half spacers (27) clamped between two jaws (55) or conical spring clamps (25) compressed by covers (26) screwed onto each cylinder (24).

3. Portable device according to claim 1 or claim 2, **characterized in that** the mast (5) and the crosspiece (3) are fixed to one another by oblique consolidation links (12), of console or tie type , placed between the mast (5) and the crosspiece (3), attached consecutively at one end, on the front part of the crosspiece (3), at least two thirds of its length starting from the fixing system (4), then on the mast (5) at its upper end, then at the rear of the crosspiece (3), then on the mast (5) under the fixing system (4) at an opposite distance from the upper end of the mast (5), and finally, the tie rod(s) are fixed at their other end to the crosspiece (3) approximately a fifth of its length starting from the fixing system (4).

4. Portable device according to one of claims 1 to 3, **characterized in that** the handling equipment (15) is composed of a harness (14), short or complete, of attachment points to the lower mast (11) and upper (13), one or more straps (17), a carabiner (19), a pad fixed around the mast at shoulder height, and two directional sleeves (21) perpendicular to the mast (5 ), one of the directional sticks (21) being oriented towards the front of an operator (16) of the portable device, the other directional stick (21) being oriented towards the left for a right-handed operator, and the right for a left-handed operator, each strap (17) being equipped with an adjustment buckle (18) to adjust its length according to the morphology of the operator.

5. Portable device according to one of Claims 1 to 4, **characterized in that** the mast (5) also consists of telescopic or modular tubes (7).

6. Portable device according to one of claims 1 to 5, **characterized in that** said telescopic or modular tubes (7) are made of carbon fiber composite material, metal, plastic, ceramic or composite material, and are made integral by clamping devices (10; 20) of the clamp type (10) for telescopic tubes or connection sleeve (20) for modular tubes, making a connection by adhesion or obstacle.

7. Portable device according to one of claims 1 to 6, **characterized in that** the bracket (1) is equipped with a video system (6) for the operator, consisting of a portable video screen (30), a camera (32) at the top of the mast (5) and their supports (31, 33), with transmission between the screen and the camera by wireless waves of the Wifi or Bluetooth type or by USB type cable.

8. Portable device according to one of claims 1 to 7, **characterized in that** it comprises a protection (52) of the front part of the crosspiece (3) having the shape of a cylinder perpendicular to the longitudinal axis of the crosspiece (3) the end of which is fitted with a rubber buffer.

9. Use of a portable device according to one of claims 1 to 8, **characterized in that** the device (2) is a spray boom (45) with several nozzles for treating roofs, a spray nozzle (46), a roadworker's brush (42), a glazier's brush (40; 41; 53), a high-pressure cleaning nozzle (39) or a tool, an instrument or a machine, cleaning tool, gripping member, machine tool, measuring or control instrument, recording device or a device for treating or cleaning a roof, facade, window or solar panel, the portable device being used for remote cleaning, treatment, waterproofing of roofs, facades , windows, solar panels, or remote use of cameras in inaccessible places, or remote use of measuring and control instruments above the opening of hazardous product tanks.

10. Use of a portable device according to claim 9, **characterized in that** the device (2) is autonomous or connected to a high or low pressure liquid supply device (8), a power supply unit, a battery electrical outlet, a pressurized gas supply or a computer, using a power circuit (9) which may include a pipe, an electrical cable (56) and a computer connection.

11. Use of a portable device according to claim 9 or claim 10, **characterized in that** the device (2) is equipped with a handle, which is fixed to the front end of the crosspiece (3) using of a clamping system (10).

12. Use of a portable device according to one of claims 9 to 11, **characterized in that** the bracket (1) is carried by the operator (16), the longitudinal plane of the bracket (1) being parallel to the sagittal plane of the operator (16), passing through the middle of his right shoulder, if the operator (16) is right-handed, and left if he is left-handed, the mast (5) being inclined towards the rear of the operator (16), at an angle between 0° and 60° relative to the vertical.
